Europäisches Patentamt

European Patent Office

Office européen des brevets

(11) Publication number: **0 250 667 B1**

# EUROPEAN PATENT SPECIFICATION

(45) Date of publication of patent specification: **18.11.93**  (51) Int. Cl.5: **F24D 19/10**, G05D 23/19

(21) Application number: **86305097.7**

(22) Date of filing: **01.07.86**

(54) **Control of fluid temperature in a wet central heating system and components suitable for a central heating system.**

(43) Date of publication of application:
**07.01.88 Bulletin 88/01**

(45) Publication of the grant of the patent:
**18.11.93 Bulletin 93/46**

(84) Designated Contracting States:
**BE DE FR IT NL**

(56) References cited:
**EP-A- 0 065 033**
**DE-C- 1 054 687**
**FR-A- 2 213 707**
**US-A- 2 444 733**

(73) Proprietor: **British Gas Corporation**
**Rivermill House**
**152 Grosvenor Road**
**London SW1V 3JL(GB)**

(72) Inventor: **Sutton, David Michael**
**60 Frimley Road**
**Camberley Surrey GU15 3EG(GB)**

(74) Representative: **Morgan, David James**
**British Gas plc,**
**Intellectual Property Department,**
**59 Bryanston Street**
**London W1A 2AZ (GB)**

**Description**

This invention relates to the control of the temperature of a heating fluid in a wet central heating system during a heating cycle.

FR-A-2213707 discloses an apparatus for controlling the temperature of the water in a wet central heating system providing space heating and domestic hot water within a building during a heating cycle when the flow water is circulating within the system, the apparatus comprising a fuel fired burner for providing a heat output to heat the water and means for controlling the heat output of the burner, the burner heat output controlling means being dependent upon both the prevailing flow water temperature within the system and upon the prevailing ambient temperature outside the building when there is a demand for space heating alone.

According to the invention apparatus is provided for controlling the temperature of the water in a wet central heating system providing space heating and domestic hot water within a building during a heating cycle when the flow water is circulating within the system, the apparatus comprising a fuel-fired burner for providing a heat output to heat the water and means for controlling the heat output of the burner, the burner heat output controlling means being dependent upon both the prevailing flow water temperature within the system and upon the prevailing ambient temperature outside the building when there is demand for space heating alone, characterised in that the burner heat output controlling means is independent of the prevailing ambient temperature outside the building when there is a demand at least for domestic hot water.

Am embodiment of the invention will now be described by way of example only with reference to the accompanying drawings in which :-

Figure 1 is a schematic representation of a typical wet central heating system inter alia showing components controlling and/or controlled by water flow, in the central heating system,

Figure 2 is a schematic representation of the components controlling and/or controlled by fuel and air flow,

Figure 3 is a schematic representation of the electrical circuit which controls the air flow modulating valve and thereby the heat output of a fully premixed burner,

Figure 4 is a graph showing the relationship between $V_W$ and $T_W$,

Figure 5 is a graph showing the relationship between $V_{OA}$ and $T_{OA}$,

Figure 6 is a graph illustrating the individual influences of the sensed output voltages on $V_{IN}$,

Figure 7 is a graph showing the relationship between $V_{OUT}$ and $V_{IN}$ of Figure 3,

Figure 8 is a graph showing the relationship between air flow A rate and $V_{IN}$,

Figure 9 is a graph showing the relationship between burner heat output $P_b$ and $V_{IN}$,

Figure 10 is a schematic view of the components of the drive voltage controller in Figure 3,

Figure 11 is a cross-section through the air flow modulating valve,

Figure 12 is a cross-section through the gas flow regulating valve which is controlled by the air flow modulating valve,

Figure 13 is a schematic representation of the controller and the various components it controls and is controlled by, and

Figures 14A and 14B comprise a simplified flow sheet showing in sequence the operations involved in starting up and running the central heating system,

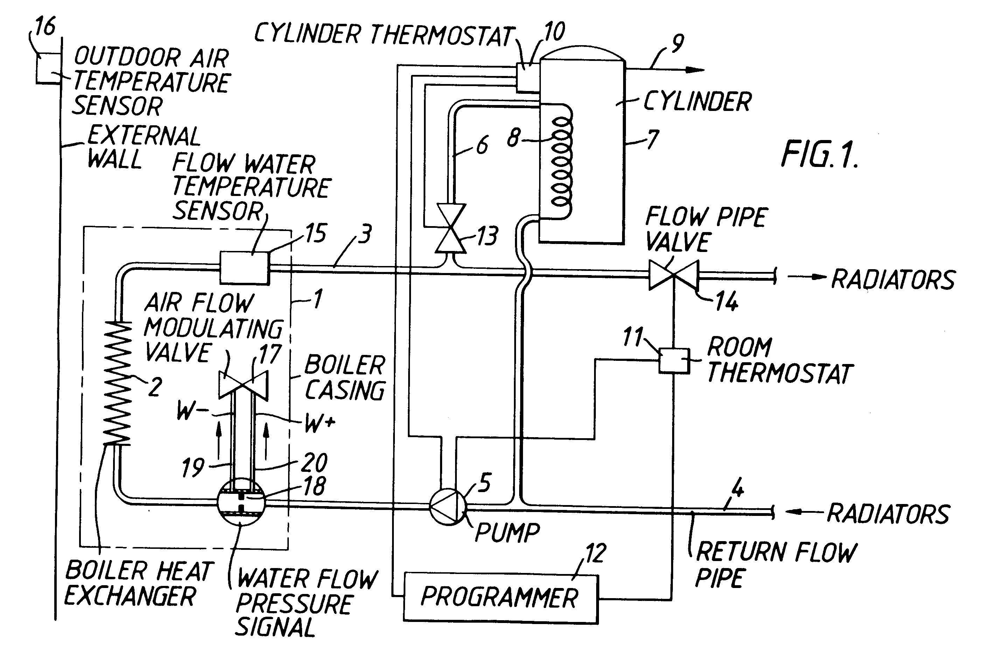

Referring to Figure 1, the wet central heating system comprises a boiler 1 for supplying heated water from a heat exchanger 2 to a flow water pipe 3 and for receiving return water by way of a return flow pipe 4.

The heated water is pumped around the system by means of an electrically operated pump 5.

A branch pipe 6 connected at one end to the flow water pipe 3 and to the other end to the return pipe 4 serves to supply heated water for heating water stored in a cylinder reservoir 7, the branch pipe 6 including a calorifier section 8 arranged inside the cylinder 7 to heat the stored water. Stored water can be drawn off from the cylinder 7 as required for domestic purposes as schematically shown by the arrow 9. While not shown, drawn off water is continuously replenished from a storage tank located above the cylinder 7.

Space heating devices in the form of radiators (not shown) are arranged to receive flow water during a heating cycle to release its heat to the building to be heated and to return the now-cooler water to the boiler 1.

Thermostats 10 and 11 respectively are provided to control the temperature of the stored water in the cylinder 7 and the air temperature of the building according to a desired room temperature setting.

A programmer 12 provides power controlled by a switch to the pump 5 by way of the thermostats 10 and 11 and can set a period during which the boiler may be caused to operate through the thermostats 10 and 11. The programmer 12 may be of the type which enables the user to select space heating and hot water independently of each other or simultaneously. The operation of the pump 5 is under control of the thermostats 10 and 11 and the pump 5 will run continuously if the or a selected one of the thermostats is closed and will cease operating when the selected thermostat or both of the thermostats is or are open.

The thermostats 10 and 11 also control respective valves 13 and 14. Valve 13 in branch pipe 6 is open to the calorifier 8 when cylinder thermostat 10 is closed (ie. hot water is required) and is closed when thermostat 10 is open to prevent heated water reaching the calorifier 8.

Similarly valve 14 in flow pipe 3 is open to the radiators when room thermostat 11 is closed (ie. space heating is required) and is closed when thermostat 11 is open to prevent heated water reaching the radiators. While not shown the radiators may be individually fitted with thermostatic valves responsive to the temperature of the actual room in which the radiator is situated.

Thus far described the system is of conventional design as will be readily understood by a person skilled in the art. However, the system also comprises a flow water temperature sensor 15 situated within a section of the flow water pipe 3 within the boiler 1. This sensor 15 provides a continuous electrical output whose level is related to the prevailing flow water temperature sensed.

Similarly the system also comprises an outdoor air temperature sensor 16 situated at a point outside the dwelling (on say an external wall). This sensor 16 provides a continuous electrical output whose level is related to the prevailing outdoor air temperature sensed.

These sensors and their significance will be described in detail subsequently.

The system also comprises within the boiler 1 a so called air flow modulating valve 17 for modulating or controlling air supplied for combustion purposes to a fully premixed burner. This valve 17 and its significance will also be described in detail subsequently.

The return pipe 4 is also provided with a bore constriction 18 at a point within the boiler 1 to provide a differential pressure between the opposite sides of the constriction 18 when the pump 5 is pumping water around the circuit. Tappings 19 and 20 on either side of the constriction serve to bleed off the respective pressures on either side of the constriction 18 to the air flow modulating valve 17 for purposes also to be described in detail subsequently.

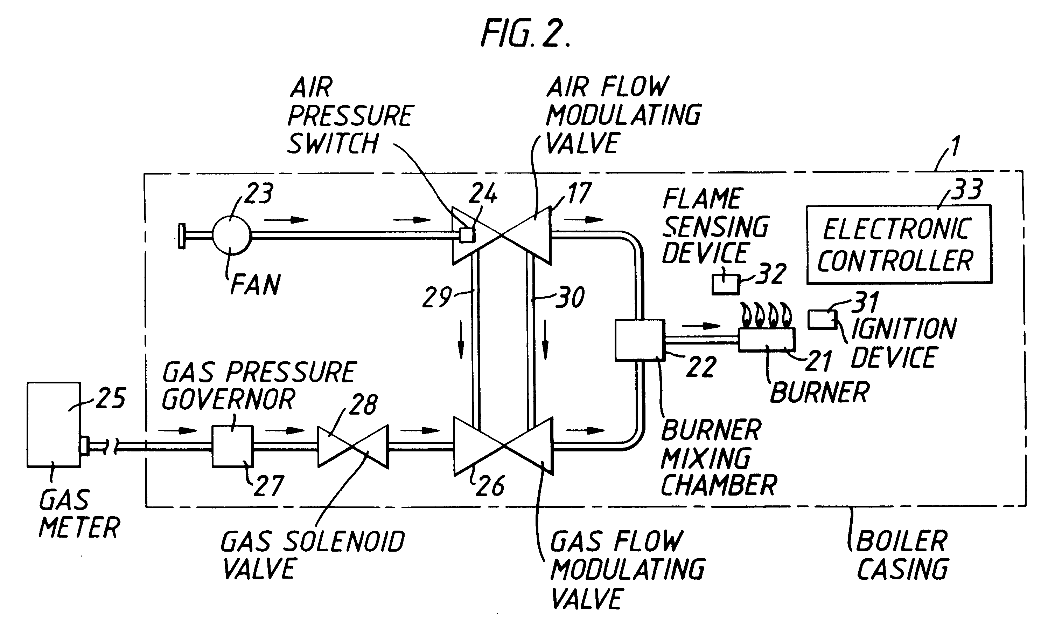

Referring to Figure 2 where components identical to those shown in Figure 1 bear the same reference numerals, the boiler 1 incorporates a burner 21 of the premixed type, that is one in which fuel (in this case natural gas) and air are mixed together in a chamber 22 before combustion. Such burners are well known and will not be described in detail herein.

Air for mixing with the gas in the chamber 22 is supplied by a fan 23 preferably of the toroidal type which draws its air from a point within the boiler casing. The air is supplied to the air flow modulating valve 17 and is monitored by an air pressure switch 24 which serves as a safety device and will be described subsequently.

Gas for the burner 21 is supplied from a gas meter 25 to a gas flow modulating valve 26. Before reaching the valve 26, the gas passes through a gas pressure governor 27, which serves to maintain the gas supply pressure to the valve 26 constant, and a gas solenoid valve 28 of the simple open/close type.

The gas flow modulating valve 26 is controlled by the air flow modulating valve 17 by way of bleed-off tappings 29,30 between the valves 17 and 26. Again this control will be described in detail subsequently.

The boiler 1 also includes a conventional spark ignition device 31 for igniting the gas/air mixture leaving the burner 21 and a conventional flame sensing device 32 which serves as a safety device should for any reason the burner flame be extinguished while gas is flowing.

The boiler 1 also includes an electronic controller 33 which will be described in more detail subsequently.

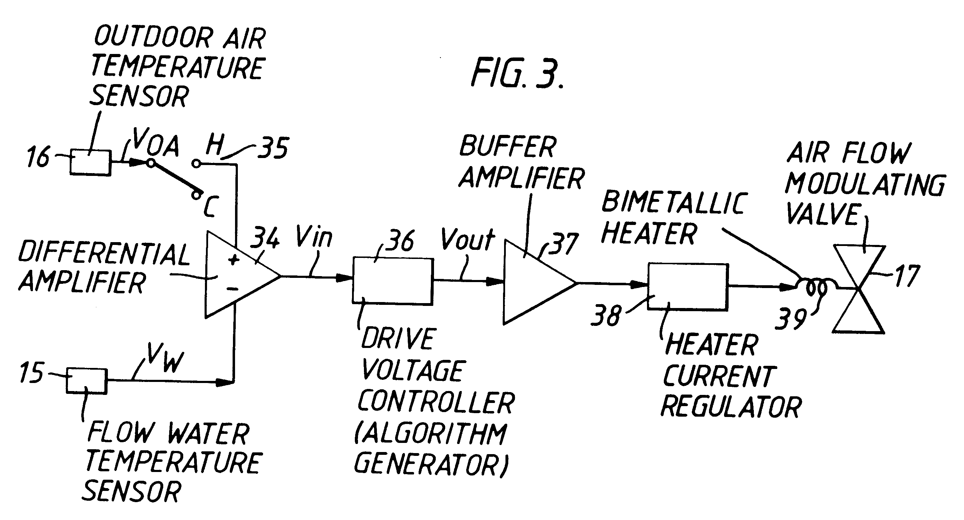

Referring to Figure 3, each of the temperature sensors 15 and 16 generates respective voltage outputs $V_W$ and $V_{OA}$ in dependence upon the respective flow water and outdoor air temperatures $T_W$ and $T_{OA}$.

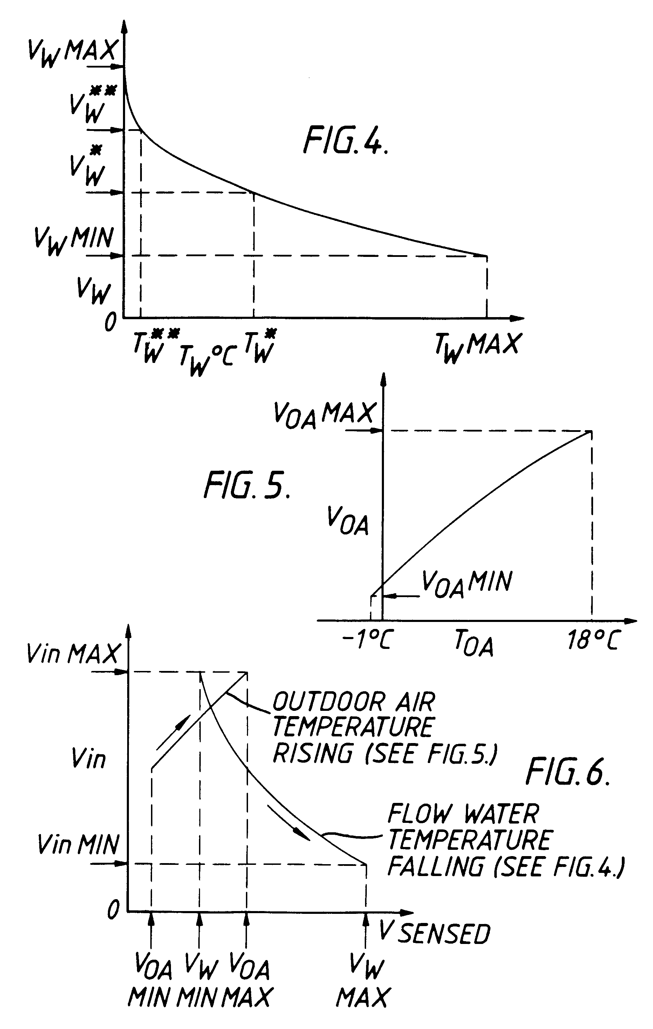

$V_W$ varies with $T_W$ in the manner shown in Figure 4 while $V_{OA}$ varies with $T_{OA}$ in the manner shown in Figure 5.

The voltages $V_W$ and $V_{OA}$ are supplied to the differential amplifier 34, $V_W$ being applied to the inverting input thereof and the voltages are combined to produce a composite output signal $V_{IN}$.

The relationship between $V_{IN}$ and $V_W$ and $V_{OA}$ may be defined by the equation :-

$$\delta V_{IN} = \left[ \frac{\partial (V_{IN})}{\partial V_W} \right] \delta V_W - \left[ \frac{-\partial (V_{IN})}{\partial V_{OA}} \right] \delta V_{OA}$$

Where $\delta V_{IN}$, $\delta V_W$ and $\delta V_{OA}$ represent infinitesimally small changes in the values of $V_{IN}$, $V_W$ and $V_{OA}$ respectively and $\partial(V_{IN})$, $\partial V_W$ and $\partial V_{OA}$ represent the partial rate of change of $V_{IN}$, $V_W$ and $V_{OA}$.

A switch 35 is connected between the sensor 16 and the amplifier 34 and is open (at position C) when the programmer is set for the supply of hot water (and optionally space heating) and the temperature of the cylinder water is below a preset level. When the cylinder water temperature is at or above this temperature level the switch 35 closes (at position H). When switch 35 is open therefore $V_{IN}$ is influenced only by $V_W$ since no $V_{OA}$ can reach the amplifier 34. While not shown specifically it will be appreciated that when the programmer 12 is set for space heating only the switch 35 is caused to move to position H.

The signal $V_{IN}$ is supplied to a drive voltage controller 36 which processes $V_{IN}$ to produce an output voltage $V_{OUT}$. $V_{OUT}$ is amplified by buffer amplifier 37 to control a heater current regulator 38 for supplying current to a bimetallic heater element 39 forming an integral part of the air flow modulating valve 17. The bimetallic heater element 39 serves to regulate the opening and closing of the valve 17 as will be described in detail subsequently. As the air regulator valve 17 controls the gas flow modulating valve 26 (Figure 2) (that is the rate of supply of air controls the rate of supply of fuel) it follows the $V_{OUT}$ controls the heat output of the burner 21.

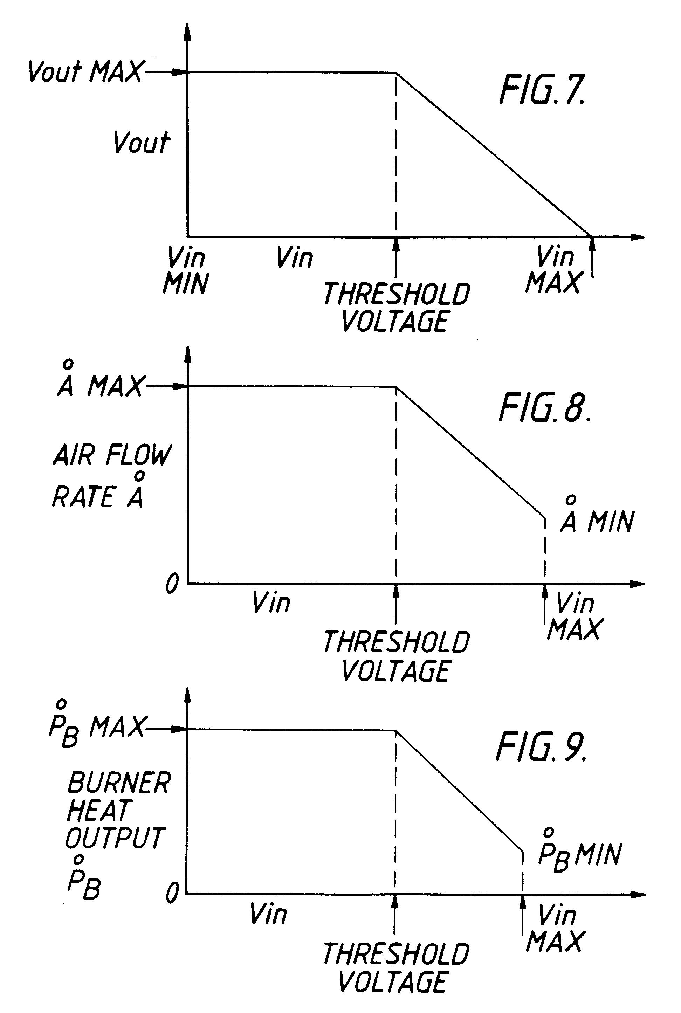

The drive voltage controller 36 serves to control $V_{OUT}$ in dependence upon $V_{IN}$ in the manner shown in Figure 7. It will be seen that where $V_{IN}$ remains below a certain critical threshold level, $V_{OUT}$ is maintained at a maximum level. However, when $V_{IN}$ exceeds its threshold level $V_{OUT}$ falls to a level which is below the maximum and eventually reaches zero at a maximum value of $V_{IN}$.

It will be seen from Figure 8 that the air flow rate A through the air flow modulating valve 17 follows a similar relationship although here at $V_{IN}$ maximum, A reaches a minimum rather than zero value. Consequently the heat output $P_B$ from the burner follows a relationship with $V_{IN}$ (Figure 9) which is similar to that shown in Figure 8 for A vs. $V_{IN}$. Here again $P_B$ reaches a minimum rather than a zero value at $V_{IN}$ max.

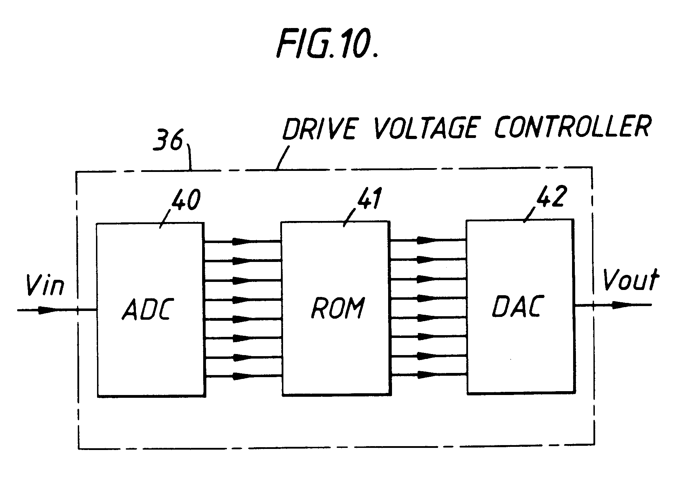

The drive voltage controller 36 is shown in detail in Figure 10. It comprises an analogue-to-digital converter (ADC) 40 for receiving the analogue input voltage $V_{IN}$, a read only memory (ROM) 41 or equivalent connected to ADC 40 and a digital to analogue converter (DAC) 42 connected to the ROM 41 for generating the analogue output voltage $V_{OUT}$.

ADC 40 generates an 8-bit binary address number proportional to the actual value of $V_{IN}$ and the ROM 41 is accessed at the appropriate address. At the accessed address there is found an 8-bit binary code corresponding to the voltage $V_{OUT}$ appropriate to the input voltage $V_{IN}$ as given by Figure 7. DAC 42 outputs this code as the voltage analogue $V_{OUT}$. In other words ROM 41 provides a so-called "look-up table for values of $V_{IN}$ vs. $V_{OUT}$.

By controlling the heat output of the burner in this way it is possible to control the temperature of the flow water leaving the boiler and thus the return water temperature in response to changes in the outdoor air temperature. This has great advantages where the boiler is of the condensing type since such boilers operate most efficiently when the return water is as low as possible to promote greater condensation, condensation increasing with decreasing return water temperature. With such control it is possible to reduce the return water temperature to a targeted minimum value which is sufficient to satisfy space heating requirements yet enables the period of operation during which the boiler is operating in the condensing mode to be extended.

In the Table we show some typical values of the flow and return water temperatures for a system with a constant mass water flow rate and the room temperature thermostat set at 22°C. The radiators are sized to provide a temperature drop of 20°C between the flow side and return side of the radiator assembly and the water flow and return temperatures are respectively 80°C and 60°C with the outdoor air temperature at -1°C, the minimum outdoor temperature for which the system is designed.

TABLE 1

| Outdoor Air Temp | Building Heat Requirement % of Maximum | Flow Temp. °C | Return Temp °C |
|---|---|---|---|
| -1 | 100 | 80 | 60 |
| +3 | 82.6 | 71.9 | 55.3 |
| +6 | 69.6 | 65.5 | 51.6 |
| +9 | 56.5 | 58.9 | 47.6 |
| +12 | 43.5 | 52.0 | 43.4 |
| +15 | 30.4 | 44.7 | 38.6 |
| +18 | 17.4 | 36.7 | 33.2 |

With an air/fuel ratio of approximately 1.2, condensation commences when the return water entry temperature to the boiler is at or below about 53°C. It will be seen therefore that in a condensing-type boiler incorporating this control system condensation will take place over a wide range of outdoor air temperatures (at outdoor temperatures above 3.5°C approximately) with a given indoor temperature (22°C) set by the room thermostat 11.

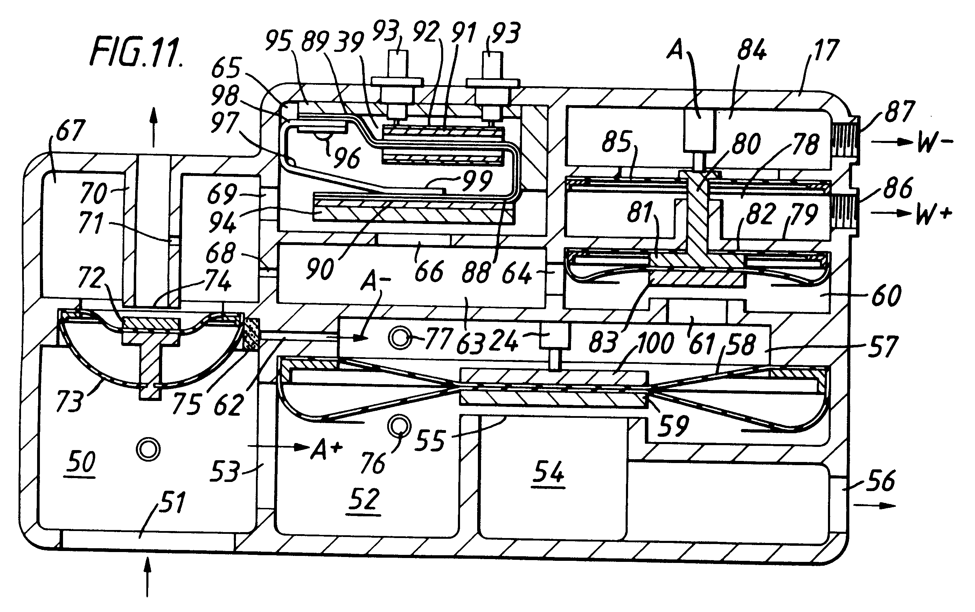

Referring to Figure 11, the air flow modulating valve 17 has a first chamber 50 with an inlet 51 to receive air from the fan 23 (shown in Figure 2), a second chamber 52 with which the first chamber 50 communicates by way of a port 53 and a third chamber 54 which communicates with the second chamber 52 by way of a port 55, the third chamber 54 having an outlet 56 for discharging the air to a mixing chamber of a burner.

The chambers 52 and 54 are separated from a fourth chamber 57 by means of a diaphragm and spring assembly 58 which is resiliently biassed downwardly so that a central lower plate 59 in the diaphragm spring assembly 58 is biassed to close the port 55.

Chamber 57 communicates with a fifth chamber 60 by way of a port 61 and also communicates with the first chamber 50 by means of a bleed aperture 62.

The fifth chamber 60 communicates with a sixth chamber 63 by means of a port 64 and the sixth chamber 63 communicates with seventh chamber 65 by means of a port 66 and an eighth chamber 67 by means of a bleed aperture 68. The chamber 65 also communicates with the chamber 67 by means of a port 69 and the chamber 67 also communicates with an air outlet duct 70 by means of a bleed aperture 71.

The first chamber 50 is provided with a valve plug 72 which is resiliently biassed downwardly by means of a diaphragm spring assembly 73 so that under normal circumstances the lower end 74 of the duct 70 is open to communicate with the port 69 and aperture 68. Adjacent to the diaphragm spring assembly 73 is a porous plug 75 which permits a bleed supply of the air entering the chamber 50 also to enter the chamber 57 (by way of the aperture 62).

Consequently when air enters the chamber 50 the majority enters the chamber 52 while a much smaller residual bleed proportion enters the chamber 57. Providing that the bleed air is able to enter the duct 70 (and leave the valve) a differential pressure will exist across the diaphragm spring assembly 58 which will tend to lift the assembly 58 so that the plate 59 uncovers the port 55 to permit the main supply of air to leave the valve by way of the chamber 54 and the outlet 56.

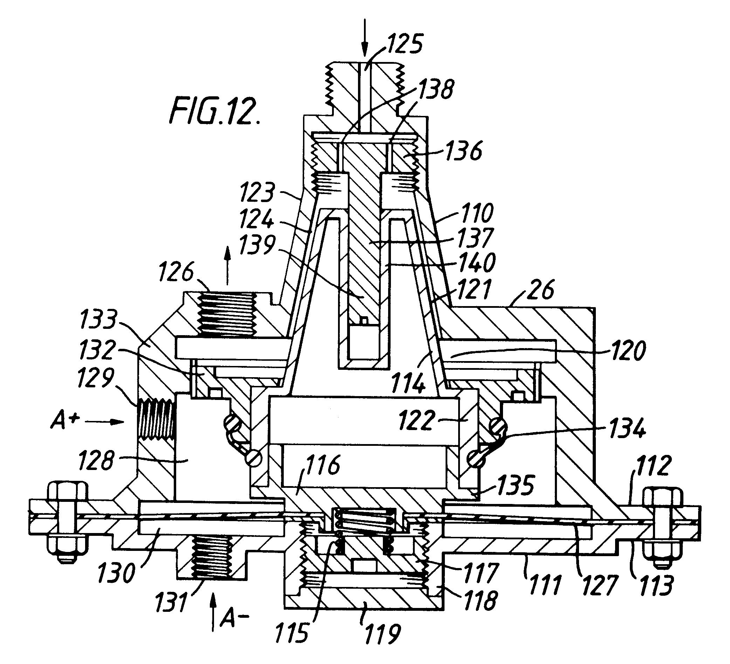

The chambers 52 and 57 include respective tapping holes 76 and 77 for purposes to be described subsequently with reference to the gas valve shown in Figure 12.

Situated above the chamber 60 is a ninth chamber 78 which is separated from the chamber 60 by a plate 79 through a central aperture within which is slidably received the stem 80 of a valve plug 81. The plug 81 is biassed downwardly by means of a diaphragm spring assembly 82 so that at rest a valve plate 83 on the plug 81 closes off the port 61 leading from chamber 57.

Situated above the chamber 78 is a tenth chamber 84 which is closed off from the chamber 78 by means of a diaphragm 85 connected to the stem 80 of the plug 81. The diaphragm 85 is also biassed downwardly by the assembly 82.

The chambers 78 and 84 are each provided with respective tapped apertures 86 and 87 serving as inlets for the water pipes 20 and 19 shown in Figure 1 and to which the apertures 86 and 87 are connected. As mentioned previously with reference to Figure 1, when water is flowing in the return pipe 4 in the central heating circuit a differential pressure is set up between the two sides of the restriction 18, W+ representing the high pressure side (tapped off by pipe 20) and W- representing the low pressure side (tapped off by pipe 19). When these pressures are applied on either side of the diaphragm 85 the resulting differential pressure is sufficient to flex the diaphragm 85 upwardly against the innate downward bias to cause the valve plug 81 to move upwardly so that plate 83 uncovers the orifice 61. This upward movement increases as the differential pressure increases, that is, as or if the rate of flow of water through the system increases. As the plate 83 moves upwardly to provide a greater flow of bleed air from chamber 57 to 60 via the port 61 the differential pressure between the opposed chambers 52 and 57 increases and plate 59 lifts to provide a greater flow of combustion air from chamber 52 to the discharge port 56 (and thence to the mixing chamber of the burner). In other words the rate of flow of combustion air is partially controlled by the rate of flow of water in the system shown in Figure 1.

Located in chamber 65 is a bimetallic heater element 39 comprising a bimetallic strip 88 of two dissimilar metals arranged as a C-shaped member having upper and lower sections 89 and 90. The upper section 89 extends through a small ceramic tube 91 (shown in section) arranged to be heated by a winding 92 supplied with current from two electrical terminals 93. A valve plate 94 is secured to the lowermost section 90 of the C and serves to close off port 66. The uppermost section 89 of the element 88 is secured to a mounting plate 95 by means of a rivet 96. A leaf spring 97 also generally in a C-shape has a flattened uppermost arm 98 also secured to the mounting plate 95 by the rivet 96. A lowermost part 99 of the spring 97 engages with the lowermost section 90 of the bimetallic strip. The spring 97 exerts a downward bias on the valve member 94 causing it to close the port 66. The metals constituting the strip 88 are so selected and the strip itself so dimensioned that on being heated the C curls up and causes the valve plate 94 to be raised against the downward bias exerted by the spring 97. The strip 88 is of course heated by the tube 91.

The electrical terminals 93 are connected to the heater current regulator 38 shown schematically in Figure 3.

The arrangement is such that the current supplied by the regulator 38 is proportioned to the the actual level of $V_{OUT}$. Thus in effect the level of $V_{OUT}$ controls the extent to which the valve plate 94 is raised against the spring bias and thereby the extent to which the port 66 is open. The extent to which port 66 is open normally controls the amount of bleed air which is able to flow through and out of the valve 17 (by way of chamber 50, plug 75, aperture 62, chamber 57, port 61, chamber 60, port 64, chamber 63, port 66, chamber 65, port 69, chamber 67, port 74 and duct 70). The rate at which the residual air can flow through the valve 17 itself controls the differential pressure across the assembly 58 and therefore the rate of flow of combustion air through the valve 17 (by way of port 56). Therefore the bimetallic heater assembly 39 enables the level of $V_{OUT}$ to provide a partial control of the rate at which air is available for combustion.

We shall describe subsequently how the rate at which air is supplied for combustion also controls the rate at which fuel is supplied. The rate of fuel supply of course controls the heat output of the burner and therefore $V_{OUT}$ provides a control of the burner heat output as previously mentioned and described.

If the pump 5 in Figure 1 is off and no water is flowing in the circuit there is no differential pressure between lines 19 and 20 in Figure 1. Consequently plate 83 will at this stage be biased into a position where it closes port 61. Therefore there is no open path through the valve 17 for the bleed air flow to reach the outlet duct 70. Therefore the pressures on either side of the assembly 58 will be equal and consequently plate 59 will be biased to a position where it closes port 55 so that no air can reach the burner mixing chamber by way of the outlet port 56. However, as soon as the pump 5 is running the water flowing in the curcuit will cause a differential pressure to arise between lines 19 and 20 in Figure 1 and this differential pressure will be applied across the assembly 85 and if sufficient will cause it to lift so that the valve plate 83 opens the port 61.

Situated in chamber 84 is a trip switch A which is open when plate 83 has closed off port 61. Switch A is closed by the stem 80 of the valve 81 when the stem 80 is lifted very slightly by upward movement of the assembly 85. As will be explained subsequently closure of switch A results in the fan 23 in Figure 2 being switched on to supply air to the air modulating valve 17 by way of the inlet port 51.

The differential pressure across assembly 85 also controls the general position of valve plate 83 with respect to the port 61 so that all things being equal the rate at which the bleed air is supplied to the outlet duct 70 is controlled by the rate at which water is flowing around the circuit. Consequently the rate at which combustion air A + is supplied to the burner mixing chamber is also controlled by the mass flow rate of the water and as a consequence the valve 17 enables the burner heat output to be controlled by the mass flow rate of the water around the circuit (as well as by $V_{OUT}$).

Situated in chamber 57 in a further trip switch 24 which is open when the valve plate 59 is closing off the port 55. As soon as the fan is running however, and bleed air is available to create a differential pressure across the assembly 58, the valve plate 59 will lift and this will cause switch 24 to close due to actuation by an uppermost valve plate 100. Closure of switch 24 causes the gas solenoid valve 28 (Figure 2) to open to permit gas to enter the gas flow modulating valve 26 for control by the air flow modulating valve 17.

As long as the differential pressure across the assembly 73 does not exceed a predetermined value, flow of combustion air will be controlled by assembly 85 in response to the mass water flow rate and by the bimetallic heater 39 in response to $V_{OUT}$ (itself responsive to $V_W$ and, when present, $V_{OA}$).

However, when the differential pressure across the assembly 73 exceeds a certain value due perhaps to a blockage upstream of the port 51 or downstream of the port 56, the assembly 73 will be urged upwardly so that valve plug 72 moves towards the port 74 to close it. All other things being equal, this will reduce the bleed air flow rate through the valve 17 and thus the differential pressure across assembly 58 which urges the valve plate 59 to its closed position. Eventually if the differential pressure reaches a critical maximum upper level, valve 72 will close port 74 completely so that the bleed air flow rate is reduced to the trickle rate permitted by bleed aperture 71 in duct 70.

This will cause the differential pressure across assembly 58 to drop to so low a value that the valve plate 100 will fall sufficiently to trip switch 24 to its open position. Consequently the gas solenoid valve 28 (Figure 2) will close to prevent gas entering the burner mixing chamber 22 and any flame will immediately be extinguished as a safety precaution.

Referring to Figure 12, the gas flow modulating valve 26 has an outer body in two sections 110 and 111 which are provided with annular flanges 112 and 113 so that they can be bolted together to form an enclosure therebetween.

Located within the enclosure is a valve member 114 which is biassed upwardly by means of a spring 115 acting on a bottom portion 116 of the valve member 114 and held between the bottom portion 116 and a retaining plug 117 which is screw fitted into a central threaded depending portion 118 of the section 111. The aperture in the portion 118 is closed by a plate 119.

The valve member 114 has a topmost portion 120 which has a frusto-conical uppermost section 121 extending from a lowermost cylindrical section 122. The frusto-conical section 121 of the valve member 114 is movable relative to a corresponding frusto-conical section 123 on the uppermost body section 110 and provides therebetween a gap 124 of variable dimensions for the flow of fuel gas from an inlet 125 at the top of the valve 26 to an outlet 126 in the section 110.

A resilient annular diaphragm 127 separates the two sections 110 and 111 and forms with the uppermost section 110 an annular chamber 128 to receive air from tapping 76 (Figure 11) by way of an inlet 129 in the body portion 110. Similarly the diaphragm 127 forms an annular chamber 130 with the lowermost section 111 to receive air from tapping 77 (Figure 11) by way of an inlet 131 in the body portion 111.

The cylindrical portion 122 of the valve member 114 is held within a retaining cup 132 whose position is adjustable relative to a portion 133 of the valve body 110 within which portion 133, the cup 132 is mounted. The cylindrical portion 122 of the valve member 114 is also connected to the retaining cup 132 by means of an elastic connector 134 and is seated on a flange 135 formed on the bottom portion 116 of the valve 114.

Upward movement of the valve member 114 is limited by its engagement between the cylindrical portion 122 and the cup 132 (as shown in Figure 12). A screw head 136 is externally threaded for engagement with a corresponding thread on the internal wall of the valve body 110. The screw head 136 also has a number of through-going channels 138 to permit gas entering the inlet 125 to enter the gap 124. The shaft 139 of the screw 137 extends into a recessed portion 140 of the valve body 110. The position of the screw within the body 110 can be adjusted to regulate gas flow through the valve 17.

When air is flowing through the air flow modulating valve 17 a differential pressure is applied across the diaphragm 127 by the air and entering the respective chambers 128 and 130. This causes the diaphragm to flex downwardly against the upward bias exerted by the spring 115 and the valve member 114 also moves downwardly to increase the gap 124 between the frusto-conical section 121 of the valve member 114 and the corresponding section 123 of the valve body 110 so that the rate of flow of gas through the valve 26 increases. The flow of gas through the valve 26 can therefore be controlled by the differential pressure across the diaphragm 127.

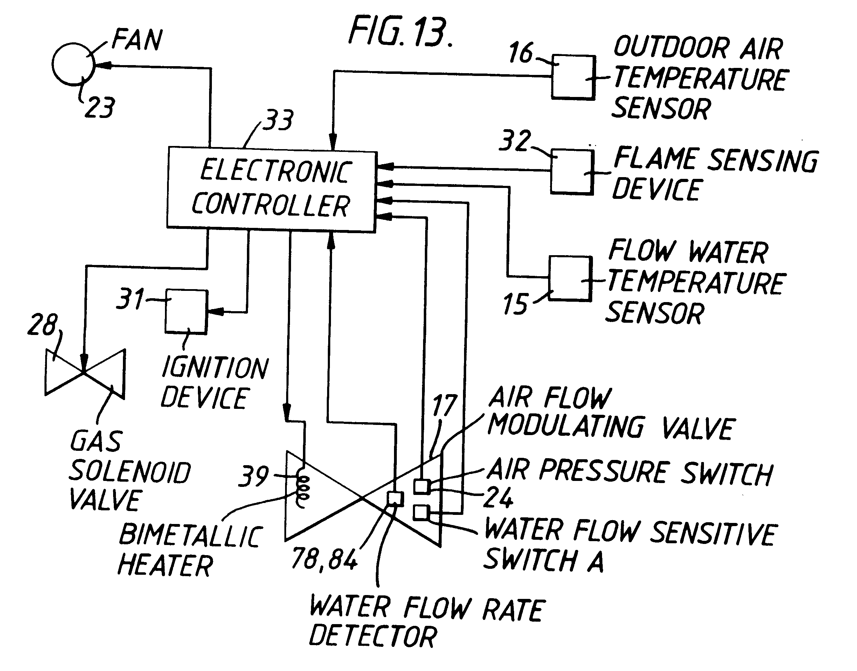

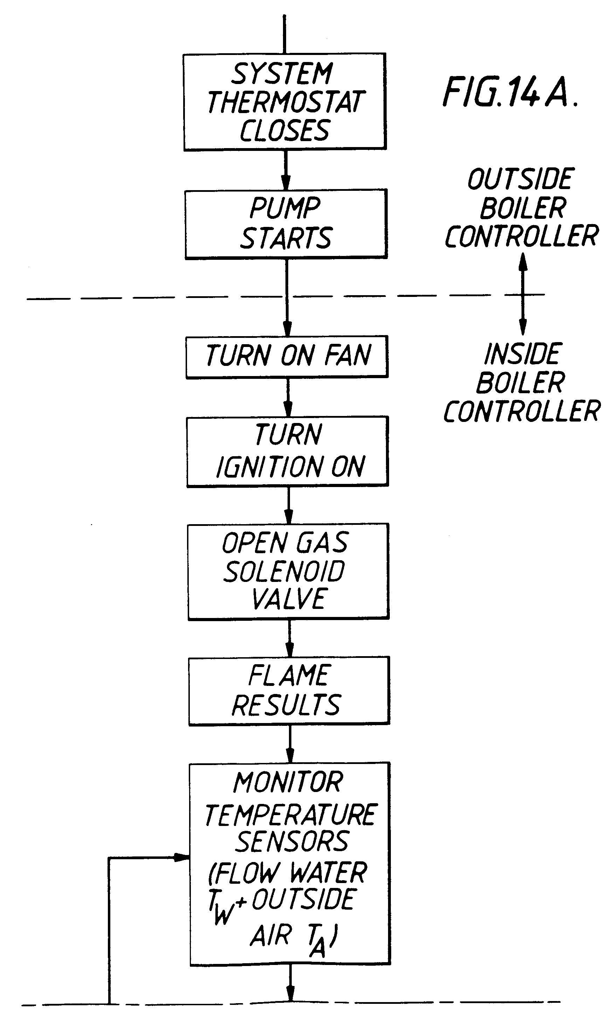

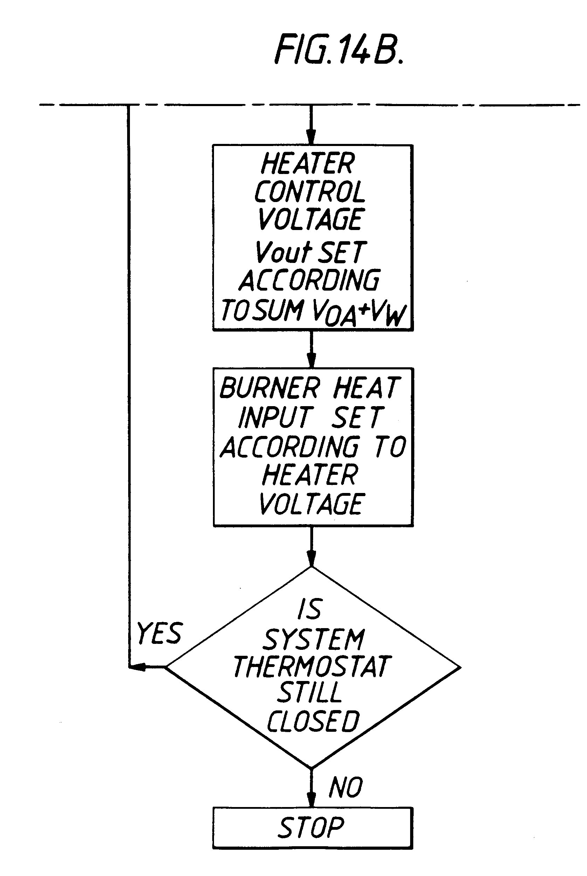

In order to understand the operation of the complete control system the reader should now refer to Figures 13, 14A and 14B.

If there is a demand for heated water in the circuit (ie. the programmer is set for the supply of hot water and/or space heating and at least one of the thermostats is closed) the water pump 5 (Figure 1) will start to pump water around the circuit. The differential pressure caused by this water flow, if sufficient, will cause water flow sensitive switch A to close and send a signal to the electronic controller 33. The controller 33 will then send an enabling signal to turn on the fan 23. After a preset period the controller 33 will actuate the ignition device 31 to generate sparks for ignition purposes and the air flow will give rise to a differential pressure which if sufficient will close air pressure switch 24. This will cause a further enabling signal to be transmitted to the controller 33. The controller 33 will then send a signal to open the gas solenoid valve 28 and a flame will result.

After the flame has been established the flow rate of the air through the air flow modulating valve 17 will be controlled by the rate at which water is flowing in the circuit (by means of the water flow rate detector compartments 78,84 in valve 17) and by $V_{OUT}$ (by means of the bimetallic heater 39 in valve 17).

The electronic controller 33 includes the differential amplifier 34, drive voltage controller 36 and the buffer amplifier 37 shown in Figure 3 and on receiving the signal $V_W$ from the flow water temperature sensor 15 and, if input $V_{OA}$ from outdoor air temperature sensor 16, the controller generates the appropriate level of $V_{OUT}$ which together with the water flow rate controls the burner heat output. When the or both thermostats open the pump 5 will stop operating, the water flow sensitive switch A will open and the controller 33 will send a signal to turn off the gas solenoid valve 28 and the fan 23. The air flow rate will drop to zero causing the air pressure switch 24 to open and the controller 33 awaits further operation of the pump 5 when the or one of the thermostats recloses.

Should the burner flame be extinguished for any reason (eg. the flame is blown out) the flame sensing device 32 sends a signal to the controller 33 to turn off the gas solenoid valve 28.

As previously described, the air flow rate through the valve 17 is controlled by the level of the voltage $V_{OUT}$ (applied through the bimetallic heater element 39) and by the differential pressure resulting from water flow applied across the diaphragm 85. However, it would be possible to redesign the system so that the water flow rate is reproduced as a voltage analogue, say $V_{WFR}$ and this could be used to control the operation of the heater element 39. In this case $V_W$ could comprise a composite of $V_{WTS}$ (voltage output of the water temperature sensor 15) and $V_{WFR}$.

This would enable the construction of the valve 17 to be simplified. The assembly 82 could be dispensed with, ports 60 and 64 would be closed up and a new port introduced to enable chamber 57 to communicate directly with chamber 63.

Plug 80 could be arranged to drive a slider along a potentiometer, the position of the slider determining the value of a tapped off voltage representing $V_{WFR}$. $V_{WFR}$ could for instance be applied to the amplifier 34 in Figure 3 to provide a composite signal $V_W$ of $V_{WFR}$ and $V_{WTS}$.

Referring to Figure 4, should there be a danger of the boiler water freezing because for instance the boiler is located outdoors, the voltage $V_W$ will rise to a voltage $V_W^{**}$ corresponding a low termperature $T_W^{**}$. At this voltage $V_W^{**}$, the electronic controller 33 will be enabled to cause the burner to fire even in the absence of a flow of water through the boiler (and the associated pipework). The burner will then operate until the voltage falls to a value of $V_W^*$ corresponding to a predetermined temperature $T_W^*$ higher than the temperature $T_W^{**}$. At this point the burner will then be turned off. Should the voltage $V_W^*$ rise again to $V_W^*$ this sequence of events will be repeated. Consequently the boiler water will be protected against freezing.

## Claims

1. Apparatus for controlling the temperature of the water in a wet central heating system providing space heating and domestic hot water within a building during a heating cycle when the flow water is circulating within the system, the apparatus comprising a fuel-fired burner (21) for providing a heat output to heat the water and means (17,24,26,28) for controlling the heat output of the burner, the burner heat output controlling means (17,24,26,28) being dependent upon both the prevailing flow water temperature within the system and upon the prevailing ambient temperature outside the building when there is demand for space heating alone, characterised in that the burner heat output controlling means (17,24,26,28) is independent of the prevailing ambient temperature outside the building when there is a demand at least for domestic hot water.

2. Apparatus as claimed in claim 1, characterised in that the burner heat output controlling means (17,24,26,28) is responsive to the mass flow rate of the flow water circulating within the system.

3. Apparatus as claimed in claim 1 or claim 2, characterised in that the burner heat output controlling means (17,24,26,28) is adapted to fully modulate the heat output of the burner (21).

4. Apparatus as claimed in any of claims 1 to 3, characterised in that the means (17,24,26,28) for controlling the heat output of the burner (21) includes a valve (26) for regulating the rate of supply of fuel to the burner (21).

5. Apparatus as claimed in claim 4, characterised in that the means (17,24,26,28) for controlling the heat output of the burner (21) also includes a valve (17) for regulating the rate of supply of air to the burner (21) for mixing with the fuel for combustion thereof.

6. Apparatus as claimed in claim 5, characterised in that the air regulating valve (17) is adapted to control the operation of the fuel regulating valve (26) in such a manner that the rate of supply of fuel is dependent upon the rate of supply of air.

7. Apparatus as claimed in claim 5 or claim 6, characterised in that the air regulating valve (17) is adapted to control the rate of supply of air to the burner (21) independence on the level of the prevailing flow water temperature, selectively in response to the level of the prevailing ambient temperature and also in response to the mass flow rate of the flow water circulating within the system.

8. Apparatus as claimed in any of claims 1 to 7, characterised in that the apparatus is incorporated in a wet central heating system providing space heating and domestic hot water.

**Patentansprüche**

1. Gerät zur Steuerung der Temperatur des Wassers in einem Warmwasser-Zentralheizungssystem, das eine Raumheizung und häusliches Brauchwasser innerhalb eines Gebäudes während eines Heizzyklus vorsieht, wenn das Strömungswasser innerhalb des Systems zirkuliert, wobei das Gerät einen mit Brennstoff befeuerten Brenner (21) zum Vorsehen eines Wärmeausgangs zum Erwärmen des Wassers und eine Einrichtung (17, 24, 26, 28) zur Steuerung des Wärmeausgangs des Brenners aufweist, wobei die Brenner-Wärmeausgangs-Steuereinrichtung (17, 24, 26, 28) abhängig ist sowohl von der vorherrschenden Strömungswasser-Temperatur innerhalb des Systems als auch von der vorherrschenden Umgebungstemperatur außerhalb des Gebäudes, wenn für Raumheizung allein Bedarf besteht, dadurch gekennzeichnet, daß die Brenner-Wärmeausgangs-Steuereinrichtung (17, 24, 26, 28) abhängig ist von der vorherrschenden Umgebungstemperatur außerhalb des Gebäudes, wenn ein Bedarf zumindest für häusliches Brauchwasser besteht.

2. Gerät nach Anspruch 1, dadurch gekennzeichnet, daß die Brenner-Wärmeausgangs-Steuereinrichtung (17, 24, 26, 28) auf die Massenströmungsrate des innerhalb des Systems zirkulierenden Strömungswassers anspricht.

3. Gerät nach Anspruch 1 oder 2, dadurch gekennzeichnet, daß die Brenner-Wärmeausgangs-Steuereinrichtung (17, 24, 26, 28) den Wärmeausgang des Brenners (21) völlig moduliert bzw. aussteuert.

4. Gerät nach einem der Ansprüche 1 bis 3, dadurch gekennzeichnet, daß die Einrichtung (17, 24, 26, 28) zur Steuerung des Wärmeausgangs des Brenners (21) ein Ventil (26) zur Regulierung der Zufuhrrate von Brennstoff zum Brenner (21) enthält.

5. Gerät nach Anspruch 4, dadurch gekennzeichnet, daß die Einrichtung (17, 24, 26, 28) zum Steuern des Wärmeausgangs des Brenners (21) außerdem ein Ventil (17) zur Regulierung der Zufuhrrate von Luft zum Brenner (21) für das Mischen mit dem Brennstoff zur Verbrennung desselben enthält.

6. Gerät nach Anspruch 5, dadurch gekennzeichnet, daß das Luft-Regulierungsventil (17) die Betätigung des Brennstoff-Regulierungsventils (26) in der Weise steuert, daß die Zufuhrrate von Brennstoff abhängig ist von der Zufuhrrate von Luft.

7. Gerät nach Anspruch 5 oder 6, dadurch gekennzeichnet, daß das Luft-Regulierungsventil (17) die Zufuhrrate von Luft zum Brenner (21) in Abhängigkeit von der Höhe der vorherrschenden Strömungswasser-Temperatur, selektiv in Ansprecherwiderung auf die Höhe der vorherrschenden Umgebungstemperatur und außerdem in Ansprecherwiderung auf die Massen-Strömungsrate des innerhalb des Systems zirkulierenden Strömungswassers steuert.

8. Gerät nach einem der Ansprüche 1 bis 7, dadurch gekennzeichnet, daß das Gerät in eine Warmwasser-Zentralheizungsanlage eingesetzt ist, die eine Raumheizung und häusliches Brauchwasser vorsieht.

**Revendications**

1. Appareil de commande de la température de l'eau dans un système de chauffage central à voie humide qui fournit un chauffage de locaux et de l'eau chaude à usage domestique à l'intérieur d'un bâtiment pendant un cycle de chauffage au cours duquel un flux d'eau circule dans le système, l'appareil comprenant un brûleur (21) à combustible projetant une flamme afin de produire un débit de chaleur pour chauffer l'eau, ainsi que des moyens (17, 24, 26, 28) de commande du débit de chaleur du brûleur, les moyens (17, 24, 26, 28) de commande du débit de chaleur du brûleur étant sous la dépendance d'une part de la température de la circulation d'eau régnant dans le système et d'autre part de la température ambiante régnant à l'extérieur du bâtiment lorsqu'il existe une demande uniquement de chauffage de locaux, caractérisé en ce que les moyens (17, 24, 26, 28) de commande du débit de chaleur du brûleur sont sous la dépendance de la température ambiante régnant à l'extérieur du bâtiment lorsqu'il existe une demande au moins d'eau chaude à usage domestique.

2. Appareil selon la revendication 1, caractérisé en ce que les moyens (17, 24, 26, 28) de commande du débit de chaleur du brûleur sont sensibles au débit massique du flux d'eau circulant dans le système.

3. Appareil selon la revendication 1 ou la revendication 2, caractérisé en ce que les moyens (17, 24, 26, 28) de commande du débit de chaleur du brûleur sont conçus de manière à moduler intégralement le débit de chaleur du brûleur (21).

4. Appareil selon l'une quelconque des revendications 1 à 3, caractérisé en ce que les moyens (17, 24, 26, 28) de commande du débit de chaleur du brûleur (21) comprennent un distributeur (26) de réglage du débit d'alimentation en combustible du brûleur (21).

5. Appareil selon la revendication 4, caractérisé en ce que les moyens (17, 24, 26, 28) de commande du débit de chaleur du brûleur (21) comprennent également un distributeur (17) de réglage du débit d'alimentation en air du brûleur (21) pour son mélange avec le combustible pour la combustion de ce dernier.

6. Appareil selon la revendication 5, caractérisé en ce que le distributeur (17) de réglage du débit d'air est conçu pour commander le fonctionnement du distributeur (26) de réglage du débit de carburant de manière telle que le débit d'alimentation en combustible soit fonction du débit d'alimentation en air.

7. Appareil selon la revendication 5 ou la revendication 6, caractérisé en ce que le distributeur (17) de réglage du débit d'air est conçu de manière à commander le débit d'alimentation en air du brûleur (21) en fonction du niveau auquel se trouve la température de l'eau en circulation, sélectivement en réponse au niveau de la température ambiante qui règne et aussi en réponse au débit massique du flux d'eau circulant dans le système.

8. Appareil selon l'une quelconque des revendications 1 à 7, caractérisé en ce que l'appareil est incorporé dans un système de chauffage central à voie humide qui fournit un chauffage de locaux et de l'eau chaude à usage domestique.

FIG.1.

16 OUTDOOR AIR TEMPERATURE SENSOR
EXTERNAL WALL
FLOW WATER TEMPERATURE SENSOR
CYLINDER THERMOSTAT — 10
9
CYLINDER
6  8  7
15  3
AIR FLOW MODULATING VALVE
FLOW PIPE VALVE
13
2
BOILER CASING
17
W−  W+
14
RADIATORS
19  20
18
ROOM THERMOSTAT
11
5
PUMP
4
RETURN FLOW PIPE
RADIATORS
BOILER HEAT EXCHANGER
WATER FLOW PRESSURE SIGNAL
PROGRAMMER  12

EP 0 250 667 B1

FIG. 2.

FIG. 3.

AIR FLOW MODULATING VALVE — 17

BUFFER AMPLIFIER — 37

BIMETALLIC HEATER

HEATER CURRENT REGULATOR — 38, 39

Vout — 36

DRIVE VOLTAGE CONTROLLER (ALGORITHM GENERATOR)

Vin — 34

OUTDOOR AIR TEMPERATURE SENSOR — 16

VOA — 35 H C

+ − DIFFERENTIAL AMPLIFIER

Vw

FLOW WATER TEMPERATURE SENSOR — 15

FIG.4.

FIG.5.

FIG.6.

OUTDOOR AIR TEMPERATURE RISING (SEE FIG.5.)

FLOW WATER TEMPERATURE FALLING (SEE FIG.4.)

14

EP 0 250 667 B1

FIG. 7.

FIG. 8.

FIG. 9.

15

# FIG.10.

DRIVE VOLTAGE CONTROLLER

FIG.11.

EP 0 250 667 B1

FIG.12.

FIG. 13.

## FIG.14 A.

```
        ┌──────────────┐
        │   SYSTEM     │
        │ THERMOSTAT   │
        │   CLOSES     │
        └──────┬───────┘
               │
        ┌──────▼───────┐
        │    PUMP      │
        │   STARTS     │
        └──────┬───────┘
               │
        ┌──────▼───────┐
        │ TURN ON FAN  │
        └──────┬───────┘
               │
        ┌──────▼───────┐
        │    TURN      │
        │ IGNITION ON  │
        └──────┬───────┘
               │
        ┌──────▼───────┐
        │  OPEN GAS    │
        │  SOLENOID    │
        │   VALVE      │
        └──────┬───────┘
               │
        ┌──────▼───────┐
        │    FLAME     │
        │   RESULTS    │
        └──────┬───────┘
               │
        ┌──────▼───────────┐
        │    MONITOR       │
        │  TEMPERATURE     │
        │   SENSORS        │
        │  (FLOW WATER     │
        │ T_W + OUTSIDE    │
        │    AIR  T_A)     │
        └──────┬───────────┘
               │
```

OUTSIDE
BOILER
CONTROLLER

INSIDE
BOILER
CONTROLLER

# FIG.14B.

```
                    ┌──────────────┐
                    │   HEATER     │
                    │  CONTROL     │
                    │  VOLTAGE     │
                    │  Vout SET    │
                    │  ACCORDING   │
                    │ TO SUM VOA+VW│
                    └──────────────┘
                            │
                    ┌──────────────┐
                    │ BURNER HEAT  │
                    │  INPUT SET   │
                    │ ACCORDING TO │
                    │   HEATER     │
                    │   VOLTAGE    │
                    └──────────────┘
                            │
        YES            ◇ IS
                       SYSTEM
                    THERMOSTAT
                       STILL
                       CLOSED
                            │ NO
                    ┌──────────────┐
                    │    STOP      │
                    └──────────────┘
```